Europäisches Patentamt

European Patent Office

Office européen des brevets

(19)

(11) Publication number: **0 310 345 B1**

(12) **EUROPEAN PATENT SPECIFICATION**

(45) Date of publication of patent specification: **30.12.92**

(51) Int. Cl.⁵: **C08G 18/08**, C08G 18/62, C09J 175/00

(21) Application number: **88308964.1**

(22) Date of filing: **28.09.88**

(54) **Aqueous polymer compositions.**

(30) Priority: **30.09.87 GB 8722973**

(43) Date of publication of application:
**05.04.89 Bulletin 89/14**

(45) Publication of the grant of the patent:
**30.12.92 Bulletin 92/53**

(84) Designated Contracting States:
**AT BE CH DE ES FR GB GR IT LI NL SE**

(56) References cited:
**DE-A- 1 469 369**
**FR-A- 2 083 583**
**FR-A- 2 378 810**
**US-A- 4 618 390**

(73) Proprietor: **ICI AMERICAS INC.**
**Concord Pike & New Murphy Road**
**Wilmington Delaware 19897(US)**

(72) Inventor: **Robertson, John Russell**
**59 Paul Lane**
**Glen Mills, PA 19342(US)**

(74) Representative: **Leherte, Georges Maurice**
**Lucien Marie et al**
**Imperial Chemical Industries PLC Legal Department: Patents P.O. Box 6 Bessemer Road**
**Welwyn Garden City Herts. AL7 1HD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to aqueous polymer compositions useful as adhesives, binders and coating compositions.

The use of vinyl polymer based aqueous dispersions (latices) as adhesive or coating compositions is well known. Unfortunately, the properties of the products obtained from these dispersions, especially their resistance to solvents and other chemical agents, are unsatisfactory for many purposes.

It is also known to use aqueous emulsions of organic polyisocyanates as adhesives and binders, suitable emulsions being described in United States Patent 3996154. The usefulness of these isocyanate emulsions is somewhat limited, however, by their relatively short pot life.

It has now been found that aqueous compositions containing emulsifiable polyisocyanates together with certain vinyl polymers have significantly improved pot lives and provide films having superior properties compared with those usually associated with vinyl polymers.

Accordingly, the invention provides an aqueous polymer composition comprising an aqueous dispersion of an isocyanate-reactive vinyl polymer and an emulsifiable organic polyisocyanate.

The isocyanate-reactive vinyl polymers present in the compositions of the invention are polymers which are obtained by the homopolymerisation or copolymerisation of ethylenically unsaturated monomers and which contain isocyanate-reactive groups, especially hydroxyl groups. Typical isocyanate-reactive vinyl polymers have hydroxyl contents in the range of from about 0.8 to 15 % by weight corresponding to hydroxyl numbers of from about 28 to about 500. Suitable isocyanate-reactive vinyl polymers are well known to the art and are disclosed, for example, in U.S. Patent 4,618,390 to Powell.

Examples of suitable isocyanate-reactive vinyl polymers include hydroxyl-containing ethylene/vinyl chloride copolymers. Such copolymers are commercially available in the form of aqueous latices commonly having a solids content of about 50 % by weight. Typical copolymers have chlorine contents of from about 20 to about 70 % by weight and hydroxyl contents in the aforementioned range. Copolymers having hydroxyl contents of about 2 % by weight have given excellent results.

Other suitable isocyanate-reactive vinyl polymers include copolymers obtained by the copolymerisation of hydroxyalkyl acrylates or methacrylates with other vinyl monomers. Particular mention may be made of hydroxy-containing vinylidene chloride/vinyl chloride copolymers, for example copolymers of vinylidene chloride, vinyl chloride, 2-ethylhexyl acrylate, methacrylic acid and 2-hydroxyethyl methacrylate. These copolymers have hydroxyl contents of from about 0.8 to 15 %, preferably 2.0 to 6.0 % by weight.

The emulsifiable organic polyisocyanates present in the compositions of the invention include those already described in the prior art, for example in US 3,996,154. The emulsifiable polyisocyanates are products obtained by pre-reacting (before adding the emulsifiable polyisocyanate to an aqueous latex to make the compositions of this invention) a polyisocyanate with a minor proportion of an alkoxypolyalkylene glycol prepared by converting one of the glycol -OH groups to an alkoxy group (for example by reaction with a lower alcohol such as methanol and/or ethanol), such products being mixtures of the polyisocyanate and a minor proportion of a nonionic surfactant formed by reaction between the polyisocyanate and the alkoxypolyalkylene glycol. Emulsifiable polyisocyanates useful in this invention are monomeric, that is they are not prepolymers. By virtue of being pre-reacted with a minor amount of an alkoxypolyalkylene glycol prior to being added to make the aqueous compositions of this invention, they do not require the external addition of emulsifying agents to form an emulsion with water, and hence are self-emulsifiable.

The self-emulsifiable polyisocyanate may be based on any organic polyisocyanate, for example low functionality MDI variants such as uretonimine modified MDI, but is preferably based on the mixtures known as polymethylene polyphenyl polyisocyanates or polymeric MDI.

Alkoxypolyalkylene glycols which may be reacted with the polyisocyanate to form the self-emulsifiable polyisocyanate include alkoxypolyethylene glycols, especially those having molecular weights in the range 250 to 4000, particularly 600 to 2000. The alkoxy group suitably contains from one to six carbon atoms, the methoxypolyethylene glycols being preferred. The amount of alkoxypolyalkylene glycol reacted with the polyisocyanate should be sufficient to provide an emulsifiable polyisocyanate which, in turn, yields an aqueous emulsion of the desired stability. In general, suitable self-emulsifiable polyisocyanates contain from 1 to 15 parts by weight of polyisocyanate/alkoxypolyalkylene glycol reaction product for each 100 parts by weight of polyisocyanate. The self-emulsifiable polyisocyanate when obtained may, if desired, be mixed with a further amount of the same or a different polyisocyanate.

Typical commercially available self-emulsifiable organic polyisocyanates include emulsifiable polymeric MDI sold under various trade names, for example Suprasec 1042 from Imperial Chemical Industries PLC.

The compositions of the invention may be prepared by dispersing the self-emulsifiable polyisocyanate in the vinyl polymer latex. High shear mixing is unnecessary for dispersing the polyisocyanate and, in general, should be avoided as it can lead to reduced pot life. Other factors such as isocyanate level and ambient conditions can affect the pot life but in many cases the compositions can have pot lives of up to eight hours. Any apparent viscosity increase due to foam formation can easily be removed by stirring.

The polyisocyanate content of the compositions can be varied over a wide range according to the effect it is desired to achieve. Typically, from 5 to 30 parts by weight of self-emulsifiable polyisocyanate can be added to 100 parts by weight of reactive polymer latex having solids content of about 50 %. The compositions may also contain other ingredients conventionally found in aqueous adhesive or coating compositions, for example anti-foam additives, thickening agents, tackifiers, fungicides, fillers such as calcium carbonate and minor amounts of surfactants and/or organic solvents, for example propylene carbonate or N-methylpyrrolidone. Other polymer latices, for example polyvinyl acetate latices, may be incorporated into the compositions of the invention if desired.

The compositions of the invention are particularly useful as adhesive compositions, showing strong adhesion to a wide variety of substrates, for example wood, metals such as stainless steel, and polyurethane foam. The compositions are particularly suitable as plywood adhesives and may be cured as either low or high temperatures. They may also be used as a basic of coating systems for various substrates. The products are remarkable for their high level of chemical and hydrolytic stability and, compared with products based solely on vinyl polymers, for their high tensile and tear strengths.

The invention is illustrated but not limited by the following Examples in which all parts are by weight.

## Example 1

Aqueous compositions were prepared by mixing the following components :

|  | Hot cure | Cold cure |
|---|---|---|
| Airflex 7522 DEV Latex (1) | 100.0 | 100.0 |
| Calcium carbonate | 20.0 | 20.0 |
| Surfynol 104A (2) | 0.5 | 0.5 |
| Foamaster 111 (3) | 0.5 | 0.5 |
| N-methylpyrrolidone | - | - |
| Suprasec 1042 (4) | 20.0 | 20.0 |

Hot cured three-ply boards were prepared by coating one side of two different veneers with 15.07 Kg/m$^2$ of adhesive then cold stacking the two coated veneers plus a top veneer under a light load. This was followed by cold pressing for 4 minutes at 0,552 MPa. At this point the adhesive had sufficient tack to hold the veneers together but the board was then finally pressed for 3 minutes at 149°C at 1.38 MPa.

In the case of the cold curing system, the veneers were coated as described above then cold pressed for 30 minutes at 1.38 MPa.

The reactive polymer latex Airflex 7522 DEV Latex (available from Air Products Inc.) contains 48 % by weight of a hydroxy functional ethylene/vinyl copolymer containing 43 % by weight of chlorine, and has a hydroxyl content of 2.0 %.

The self-emulsifiable isocyanate was a reaction product of polymeric MDI, containing about 50 % of diisocyanates, with a methoxypolyethylene glycol having a molecular weight of approximately 650.

## Example 2

The following table identifies formulations containing varying amounts of emulsifiable isocyanate and gives the properties of the derived films.

In addition to the improved tear and tensile strengths shown in the Table, the films from the formulations containing the self-emulsifiable isocyanate were superior in water, chemical and solvent resistance compared with the films from formulation E.

| Formula | A | B | C | D | E |
|---|---|---|---|---|---|
| Airflex 7522 DEV Latex (1) | 100 | 100 | 100 | 100 | 100 |
| Surfynol 104A (2) | 0.5 | 0.5 | 0.5 | 0.5 | 0.5 |
| Foamaster 111 (3) | 0.5 | 0.5 | 0.5 | 0.5 | 0.5 |
| M-Pyrol (5) | 5.0 | 5.0 | 5.0 | 5.0 | 5.0 |
| Suprasec 1042 (4) | 10.0 | 15.0 | 20.0 | 25.0 | 0.0 |

| Specimen | Tear Resistance kN/m | Tensile Strength MPa | Elongation at break % |
|---|---|---|---|
| A | 95.72 | 27.6 | 150 |
| B | 112.52 | 27.6 | 120 |
| C | 119.52 | 31.05 | 112 |
| D | 130.9 | 37.95 | 45 |
| E | - | 13.8 | 180 |

Example 3

The following Table identifies formulations containing a hydroxy functional vinylidine chloride/vinyl chloride copolymer (Haloflex DP 2022S, available from Imperial Chemical Industries PLC, containing 60 % by weight of a copolymer containing 63 % by weight of chlorine). The improvements in tear and tensile strengths brought about by increased levels of self-emulsifiable polymeric MDI can again be seen.

| Formula | A | B | C | D | E |
|---|---|---|---|---|---|
| Haloflex DP 2022S (6) | 100 | 100 | 100 | 100 | 100 |
| Surfynol 104A (2) | 0.5 | 0.5 | 0.5 | 0.5 | 0.5 |
| Foamaster 111 (3) | 0.5 | 0.5 | 0.5 | 0.5 | 0.5 |
| M-Pyrol (5) | 5.0 | 5.0 | 5.0 | 5.0 | 5.0 |
| QR-708 (7) | 0.7 | 0.7 | 0.7 | 0.7 | 0.7 |
| Suprasec 1042 (4) | 10.0 | 15.0 | 20.0 | 25.0 | 30.0 |

| | Tear Resistance | Tensile Strength | Elongation at break |
|---|---|---|---|
| Specimen | kN/m | MPa | % |
| A | 23.62 | 4.35 | 145 |
| B | 40.25 | 9.66 | 80 |
| C | 52.5 | 11.73 | 45 |
| D | 70 | 12.07 | 25 |
| E | 74.37 | 12.42 | 20 |

(1)   Airflex 7522 DEV is a reactive polymer latex from Air Products.

(2)   Surfynol 104 A is a wetting agent from Air Products.

5

(3)   Foamaster 111 is an anti-foam agent from Diamont Shawrock.

(4)   Suprasec 1042 is a self-emulsifiable MDI from Imperial Chemical Industries.

(5)   M-Pyrol is a coalescing solvent from GAF.

(6)   Haloflex DP 2022S is a reactive polymer latex from Imperial Chemical Industries.

(7)   QR-708 is a thickening agent from Rohm & Haas.

**Claims**

1.  An aqueous dispersion of an isocyanate-reactive vinyl polymer which is obtained by the homopolymerisation or copolymerisation of ethylenically unsaturated monomers, and a monomeric self-emulsifiable organic polyisocyanate obtained by pre-reacting a polyisocyanate with a minor portion of an alkoxy polyalkylene glycol prepared by converting one of the glycol OH groups to an alkoxy group.

2.  A dispersion according to claim 1 wherein the isocyanate-reactive vinyl polymer has a hydroxyl content of from about 0.8 to about 15 % by weight.

3.  A dispersion according to claim 2 wherein the isocyanate-reactive vinyl polymer is a hydroxyl-containing ethylene/vinyl chloride copolymer.

4.  A dispersion according to claim 2 wherein the isocyanate-reactive vinyl polymer is a hydroxyl-containing vinylidene chloride/vinyl chloride copolymer.

5.  A dispersion according to any of the preceding claims wherein the self-emulsifiable polyisocyanate is a self-emulsifiable polymethylene polyphenyl polyisocyanate mixture.

**Patentansprüche**

1.  Wässrige Dispersion eines isocyanatreaktiven Vinylpolymers, das durch die Homopolymerisation oder Copolymerisation von ethylenisch ungesättigten Monomeren gewonnen wurde und eines monomeren selbstemulgierbaren, organischen Polyisocyanates, das durch Präreaktion eines Polyisocyanates mit einem geringen Anteil eines Alkoxypolyalkylenglykols, hergestellt durch Umsetzung einer der OH-Gruppen des Glykols zu einer Alkoxygruppe, gewonnen wurde.

2.  Dispersion nach Anspruch 1, wobei das isocyanatreaktive Vinylpolymer einen Hydroxylgehalt von etwa 0,8 bis etwa 15 Gew.-% aufweist.

3.  Dispersion nach Anspruch 2, wobei es sich bei dem isocyanatreaktiven Vinylpolymer um hydroxylhaltige Ethylen/Vinylchlorid-Copolymere handelt.

**4.** Dispersion nach Anspruch 2, wobei es sich bei dem isocyanatreaktiven Vinylpolymer um ein hydroxylhaltiges Vinylidenchlorid/Vinylchlorid-Copolymer handelt.

**5.** Dispersion nach einem der vorhergehenden Ansprüche, wobei das selbstemulgierbare Polyisocyanat ein selbstemulgierbares Polymethylen-Polyphenyl-Polyisocyanatgemisch ist.

**Revendications**

**1.** Dispersion aqueuse d'un polymère vinylique réactif avec les isocyanates, qui est obtenue par homopolymérisation ou copolymérisation de monomères à insaturation éthylénique, et d'un polyisocyanate organique monomérique auto-émulsionnable obtenu par préréaction d'un polyisocyanate avec une petite quantité d'un alkoxypolyalkylèneglycol préparé par transformation de l'un des groupes OH du glycol en un groupe alkoxy.

**2.** Dispersion suivant la revendication 1, dans laquelle le polymère vinylique réactif avec les isocyanates possède une teneur en groupes hydroxyle d'environ 0,8 à environ 15 % en poids.

**3.** Dispersion suivant la revendication 2, dans laquelle le polymère vinylique réactif avec les isocyanates est un copolymère éthylène/chlorure de vinyle contenant des groupes hydroxyle.

**4.** Dispersion suivant la revendication 2, dans laquelle le polymère vinylique réactif avec les isocyanates est un copolymère chlorure de vinylidène/chlorure de vinyle contenant des groupes hydroxyle.

**5.** Dispersion suivant l'une quelconque des revendications précédentes, dans laquelle le polyisocyanate auto-émulsionnable est un mélange auto-émulsionnable de polyméthylène-polyphényl-polyisocyanates.